# EUROPEAN PATENT APPLICATION

(11) **EP 4 601 347 A1**
(43) Date of publication of application: **13.08.2025**
(21) Application number: 24305233.9
(22) Date of filing: 12.02.2024
(51) Int. Cl.: H04W 12/30, H04W 12/40

(54) **CONNECTIVITY PROFILE PROVISIONING FOR SECURE ELEMENT**

(71) Applicant: Kigen (UK) Limited, Cambridge Cambridgeshire CB1 2GE (GB)
(72) Inventor: JUN, Jerry Chun-Pai, Wilmington, 19801 (US); CASANOVA, Juan Carlos Perez, Wilmington, 19801 (US); TEBBUTT, Colin Dean, 7925 Cape Town (ZA); HUNTER, William David, 7925 Cape Town (ZA); GHAROUT, Saïd, Belfast, BT1 3BG (GB)
(74) Representative: D Young & Co LLP

(57) **Abstract**

A method is provided for provisioning a secure element with a given connectivity profile for mobile network communication. The method comprises: receiving, at the secure element, a bound profile package specifying the given connectivity profile, the bound profile package being encrypted using an encryption key specific to the secure element; decrypting the bound profile package using a pre-installed key pre-installed in key storage of the secure element prior to initiation of a connectivity profile provisioning process for provisioning the secure element with the given connectivity profile; and installing the given connectivity profile from the decrypted bound profile package on the secure element.

## Description

### BACKGROUND

### Technical Field

The present technique relates to the field of mobile network communication. More particularly, it relates to provisioning a secure element with a connectivity profile for mobile network communication.

### Technical Background

An electronic device may be provided with the secure element on which a connectivity profile may be installed to enable access to a given mobile network. For example, the connectivity profile may comprise applications, identifiers and keys used to negotiate network access for particular user who has subscribed to a mobile network. The secure element may have tamper resistance mechanisms, for protecting the contents of the secure element against tampering. Traditionally, the secure element may comprise a discrete removable integrated circuit card, typically known as a SIM (subscriber identity module) or UICC (universal integrated circuit card). With a conventional UICC, providing an electronic device with a new connectivity profile would require the UICC to be replaced (with such UICCs being manufactured in a secure facility to comprise a connectivity profile for a particular network provider, which subsequently cannot be changed without replacing the whole UICC).

However, in recent years new form factors for the secure element have been developed, such as an eUICC (embedded universal integrated circuit card or eSIM) or iUICC (integrated universal integrated circuit card or iSIM). An eUICC comprises a small integrated circuit card permanently soldered onto the circuit board that also carries the system-on-chip providing the processor and memory storage for an electronic device. An iUICC integrates the tamper-resistant element even closer to the processor of the electronic device, by providing a tamper-resistant element on the same integrated circuit as the rest of the System-on-chip. Hence, with an eUICC or iUICC, the secure element is not removable from the electronic device by the end user, and so mechanisms are supported for remote provisioning of a secure element with a connectivity profile for mobile network communication. Such remote provisioning is typically carried out according to the GSMA standard SGP.22 for "Remote SIM Provisioning" (RSP).

### SUMMARY

At least some examples of the present technique provide a method for provisioning a secure element with a given connectivity profile for mobile network communication, the method comprising: receiving, at the secure element, a bound profile package specifying the given connectivity profile, the bound profile package being encrypted using an encryption key specific to the secure element; decrypting the bound profile package using a pre-installed key pre-installed in key storage of the secure element prior to initiation of a connectivity profile provisioning process for provisioning the secure element with the given connectivity profile; and installing the given connectivity profile from the decrypted bound profile package on the secure element.

At least some examples of the present technique provide a method comprising: receiving a bound profile package preparation request requesting preparation of a bound profile package comprising a given connectivity profile for mobile network communication, the bound profile package preparation request specifying identification information enabling unique identification of a secure element to be provisioned with the given connectivity profile; based on the identification information, looking up an encryption key specific to the secure element, wherein the encryption key corresponds to a pre-installed key pre-installed in key storage of the secure element prior to initiation of a connectivity profile provisioning process for provisioning the secure element with the given connectivity profile; preparing the bound profile package comprising the given connectivity profile, where the bound profile package is encrypted using the encryption key specific to the secure element; and providing the bound profile package to the bound profile package requester.

At least some examples of the present technique provide a computer program comprising instructions which, when executed on a computer, cause the computer to perform the method as claimed in any preceding claim. The computer program may be stored on a computer-readable storage medium. The computer-readable storage medium may be non-transitory storage medium.

At least some examples of the present technique provide a secure element comprising: interface circuitry to receive a bound profile package specifying a given connectivity profile, the bound profile package being encrypted using an encryption key specific to the secure element; key storage to store a pre-installed key pre-installed on the secure element prior to initiation of a connectivity profile provisioning process for provisioning the secure element with the given connectivity profile; and processing circuitry to decrypt the bound profile package using the pre-installed key, and to install the given connectivity profile from the decrypted bound profile package on the secure element.

Further aspects, features and advantages of the present technique will be apparent from the following description of examples, which is to be read in conjunction with the accompanying drawings.

### BRIEF DESCRIPTION OF THE DRAWINGS

Figure 1 illustrates infrastructure for remote provisioning of a connectivity profile for a secure element;
Figure 2 illustrates an example of a secure element;
Figure 3 illustrates steps for manufacture of a secure element;
Figure 4 illustrates steps for preparation of a bound profile package comprising a connectivity profile;
Figure 5 illustrates steps for loading a bound profile package onto a secure element;
Figure 6 illustrates steps for installing the connectivity profile from a bound profile package onto the secure element;
Figure 7 illustrates a first example in which the provisioning of the connectivity profile takes place at a device manufacturing site;
Figure 8 illustrates a second example of in-field provisioning when the device is in the hands of an end user;
Figure 9 illustrates transfer of a bound profile package to the device in instalments;
Figure 10 illustrates a first example for establishment of a pre-installed key; and
Figure 11 illustrates a second example for establishment of a pre-installed key.

### DESCRIPTION OF EXAMPLES

In the examples below, a method is provided for provisioning a secure element with a given connectivity profile for mobile network communication. The method comprises receiving a bound profile package (BPP) at the secure element, the BPP being encrypted using an encryption key specific to the secure element. A BPP is a package which is cryptographically linked to a specific instance of a secure element using the encryption key, so that the BPP would not be able to be installed on another secure element other than the specific secure element targeted by the BPP. This encryption makes the BPP suitable for provisioning of connectivity profiles where there is a need to ensure that the connectivity profile can be trusted to represent a specific end user.

The BPP is decrypted at the secure element using a pre-installed key pre-installed in key storage of the secure element prior to initiation of a connectivity profile provisioning process for provisioning the secure element with the given connectivity profile. The given connectivity profile obtained from the decrypted BPP can then be installed on the secure element.

This departs from conventional provisioning methods according to the RSP standard (GSMA SGP.22), which typically require a key agreement procedure to be performed as part of the connectivity profile provisioning process. In RSP, after the secure element itself or a loader agent managing the provisioning for the secure element contacts a remote server to initiate the procedure for installing a specific connectivity profile on the secure element, the server and secure element perform a mutual authentication procedure which includes random challenges being exchanged to provide material used to generate symmetric keys for single-session use which will be used to protect the subsequent transmission of a BPP from the server to the secure element.

In contrast, the examples below can eliminate such key agreement steps from the connectivity profile provisioning process because a pre-installed key, already installed in the key storage of the secure element prior to any contact being made to initiate provisioning of a specific connectivity profile, is used to protect the BPP to be transferred to the secure element. This would be counterintuitive to a skilled person because it departs from the well-established standard protocol defined in RSP, which presents the key agreement performed during mutual authentication steps as an essential step for ensuring there is sufficient security associated with the provisioning process.

In practice, however, inventors recognised that use of a pre-installed key can be extremely beneficial in making remote provisioning methods suitable for use with energy-constrained devices which cannot currently benefit easily from the ability to remotely install a new connectivity profile according to RSP. In RSP, the key agreement steps, and the associated requirement that the rest of the provisioning protocol should be protected by a single-session key agreed in the key agreement steps, means that in practice the device comprising the secure element would need sufficient energy to be able to transfer all of the BPP to the device and decrypt and install the profile on the secure element in a single session. In practice, there is a class of devices requiring mobile network connectivity that cannot guarantee having sufficient energy available for the length of time needed to carry out the whole RSP process, e.g. for devices powered based on energy harvesting from ambient sources, such as solar energy, wind energy, etc., which may only be intermittently present. This means that, for such devices, while the form factor of the secure element installed on the device may be a form factor (such as eUICC or iUICC) designed to make remote provisioning simpler, in practice the energy demands of the RSP process mean that the secure element on such devices tends to be provisioned with profiles for specific mobile networks while at the device manufacture stage, rather than when the device is operational in the field. This means that the device manufacturer (who assembles a secure element provided by a different manufacturer into an electronic device) needs to know in advance which specific mobile networks a given batch of devices will be required to access, and hence needs to identify several different batches of devices with different mobile network operator's profiles as different "stockkeeping units" (SKUs), managed as entirely separate products from a stockkeeping and manufacturing control point of view. This problem becomes even worse if devices need to be provided with multiple profiles, as each set of devices having a given combination of mobile network operator's profiles would be treated as a different SKU, increasing the number of distinct SKUs needed to be tracked by the device manufacturer. In general, the manufacturing costs will increase if the manufacturer has to manage a number of smaller batches of products rather than a single large batch of nominally identical products. Therefore, the limitation that RSP is not generally suitable for in-field provisioning of profiles for energy-constrained devices means that manufacturing costs tend to increase, which is disproportionate when compared against the general low cost of such very small energy-constrained devices.

In contrast, the inventors have recognised that, despite the high security generally required for protecting access to mobile network profiles, the key agreement step is not an essential step of the remote provisioning process and pre-installed keys, installed in the secure element in advance of entering into any provisioning process for delivering a specific connectivity profile to the secure element, can be sufficient to guarantee security. By enabling use of pre-installed keys for predicting the BPP, it becomes practical to provision a secure element with a new connectivity profile remotely when the secure element is at a less secure site (e.g. at a device manufacturer other than the initial manufacturer of the secure element, or when the device is in the hands of an end user in the field), without any guarantee of sufficient network connectivity and energy being present that would be necessary to allow the typical key agreement steps of RSP to be performed. Hence, this can reduce manufacturing costs and increase flexibility of post-manufacture updates of connectivity profiles for secure elements used in energy-constrained devices.

The given connectivity profile may be installed into a given Issuer Security Domain - Profile, ISD-P, of the secure element. An ISD-P acts as the on-security-element representative of a given mobile network operator, and controls the use of a specific connectivity profile for that operator. For example, the ISD-P may provide a file system, set of applications, state machine functions, keys and other resources for securely managing provisioning and use of a specific mobile network operator's connectivity profile. In the GSMA standards, the key agreement steps in RSP are typically managed by the ISD-P so that the ISD-P already exists before the key agreement steps are performed, with the agreed key then being stored within key storage managed by the ISD-P which is protected against access by other portions of the secure element (e.g. other ISD-Ps for other network operators' profiles). However, with the approach described below the pre-installed key used to protect the BPP is already stored in the key storage before creation of the given ISD-P (into which the given connectivity profile is to be installed). This is counter-intuitive and represents a departure from the established GSMA standards, but helps address the problems with conventional RSP for energy-constrained devices as discussed above, enabling remote provisioning of connectivity profiles to become practical for such devices.

The bound profile package may be decrypted using a selected pre-installed key selected from among a plurality of pre-installed keys pre-installed in the key storage prior to initiating the connectivity profile provisioning process for the given connectivity profile, and the bound profile package may be encrypted using a selected encryption key corresponding to the selected pre-installed key. Hence, the secure element may have pre-installed a set of multiple keys available for later use in profile provisioning. At the time of the connectivity profile provisioning process for provisioning the secure element with the given connectivity profile, the secure element may receive an identifier of the specific pre-installed key to be used for decrypting the BPP for that given connectivity profile, and select from among its set of pre-installed keys the specific key to be used.

The selection of which key is to be used may be driven by the party which provides the BPP, which may have a record of which of the keys have been used previously for provisioning of other provisioning, and select an unused key whose identifier is communicated to the secure element. Each of the plurality of pre-installed keys may be a single-use key restricted for use in provisioning of a single connectivity profile on the secure element. This provides sufficient security guarantees compared to the standard RSP approach of negotiating a single-use session key each time as part of the connectivity profile provisioning process. The server managing the BPP provision can manage use of the keys to prevent any of the pre-agreed keys being used more than once.

Hence, at the secure element side, the selected pre-installed key may be selected based on at least one of: a keyset identifier of a keyset associated with a party providing the bound profile package; and a key identifier identifying a specific key within the keyset associated with the party providing the BPP. For example, a header of the BPP may indicate the keyset identifier of the keyset from which the key is to be selected, and the key identifier identifying which specific key in that keyset is to be used.

For example, the keyset identifier may be a server identifier or public key associated with a profile server which provides the BPP. The secure element may support a number of keysets provided by different parties (e.g. servers managed by different network operators). By selecting the key to use based on the keyset identifier, this reduces risk of a keyset associated with one mobile network operator's server from being used with a BPP provided by a different party.

The pre-installed key may be a key obtained without performing any key agreement procedure between the secure element and a provider of the bound profile package at the time of performing the connectivity profile provisioning process for the given connectivity profile. This is a significant departure from the conventional RSP standard which requires such key agreement steps as part of a "mutual authentication" between the BPP providing server and the secure element. With the approach described in this application, while there may still be some mutual authentication steps to check that the secure element and BPP provider can be trusted (e.g. based on checking public key certificates), the key used to encrypt/decrypt the BPP transmission does not need to be negotiated at the time of the connectivity profile provisioning process, but rather can be pre-installed in the secure element at a manufacturing phase to reduce the period of time for which connectivity and energy needs to be guaranteed during the profile provisioning process.

The connectivity profile provisioning process may support the bound profile package being transferred from an external source to a device comprising the secure element in two or more separate transfer sessions. This is extremely beneficial for energy constrained devices where there may be insufficient energy available to enable the full transfer of the BPP in one session, so that it is preferable to transfer the BPP in instalments as and when there is sufficient energy available (possibly spread over an extended period of time such as days or weeks, if necessary). Transferring the BPP in instalments is not typically possible using conventional RSP because the standard's requirement to use a single-session key agreed during mutual authentication (which is to be discarded at the end of the session) to protect the BPP transmission means that the entire BPP transfer must complete in a single session. By use of the pre-installed keys, transfer of a BPP in multiple instalments becomes feasible, greatly improving the feasibility of use of remote provisioning schemes in in-field settings for energy-constrained devices.

The method may comprise maintaining a progress tracking indication to track progress of transferring the bound profile package to the device comprising the secure element. The progress tracking indication could be maintained either at the secure element itself (e.g. within software running in the ISD-P for which the profile is being installed), or could be maintained by software external to the secure element, e.g. a loader agent executing on the device comprising the secure element. By maintaining an indication tracking how much of the BPP has been loaded to the device comprising the secure element, this helps support the ability for an energy-constrained device to load the BPP in instalments to facilitate in-field provisioning of connectivity profiles.

Installation of the BPP on the secure element may be dependent on verification of whether a check value, derived from the bound profile package assembled from data transferred to the device, corresponds to an expected value. For example, software executing on the secure element may calculate a check value by applying a hash function to the assembled BPP and may compare that check value against an expected value provided by the BPP provider. This protects against errors in transmission or in the assembly of the BPP transferred in instalments which could otherwise risk incorrect installation of the profile on the secure element.

While the approach discussed above provides an alternative to Remote Sim Provisioning (RSP) according to the GSMA SGP .22 standard, a given secure element may also support RSP according to GSMA SGP .22, so support for RSP is not excluded. For example, a given secure element (or a loader agent managing provisioning for the secure element) may select, for a given instance of the provisioning process when a given connectivity profile is to be installed on the secure element, whether that provisioning process should execute according to RSP (with the conventional key agreement steps performed at the time of the provisioning process), or according to the technique described here (where the BPP is encrypted/decrypted based on a pre-installed key as discussed earlier).

The steps described above can be performed by the secure element itself (using hardware of the secure element and/or software executing within the secure element).

A complementary method is described, for provisioning a secure element with a given connectivity profile for mobile network communication, the method comprising: issuing a request specifying identification information enabling unique identification of the secure element; receiving, in response to the request, a bound profile package (BPP) specifying the given connectivity profile, wherein the bound profile package is encrypted using an encryption key specific to the secure element corresponding to the identification information; and loading the bound profile package onto the secure element to trigger decryption of the bound profile package using a pre-installed key pre-installed in the key storage of the secure element prior to initiation of a connectivity profile provisioning process for provisioning the secure element with the given connectivity profile. For example, these steps may be performed by a loader agent (e.g. a local profile assistant) that manages loading of the BPP onto the secure element. For example, the loader agent could be any of: software executing within the secure element itself; software executing, outside the secure element, on the electronic device that comprises the secure element; software executing on a helper device separate from the device comprising the electronic device. For example, the helper device could be a mobile phone, tablet computer or other portable electronic device which a user could use to configure the electronic device having the secure element - this approach can be useful if the device having the secure element is a relatively small device which does not have a convenient user interface for direct user interaction (e.g. the device having the secure element may not have a keyboard, display screen etc.). Wherever the loader agent is situated, the loader agent can send a request specifying information allowing the secure element to be identified, which can be used by a server to identify the associated key(s) for that element and provide the BPP encrypted by an encryption key corresponding to the pre-installed key on the secure element. The encrypted BPP can then be loaded onto the secure element by the loader agent, to trigger decryption of the BPP using the pre-installed key and installation of the corresponding connectivity profile.

A further complementary method is described, comprising receiving a bound profile package (BPP) preparation request requesting preparation of a bound profile package comprising a given connectivity profile for mobile network communication, the bound profile package preparation request specifying identification information enabling unique identification of a secure element to be provisioned with the given connectivity profile; based on the identification information, looking up an encryption key specific to the secure element, wherein the encryption key corresponds to a pre-installed key pre-installed in key storage of the secure element prior to initiation of a connectivity profile provisioning process for provisioning the secure element with the given connectivity profile; preparing the bound profile package comprising the given connectivity profile, where the bound profile package is encrypted using the encryption key specific to the secure element; and providing the bound profile package to the bound profile package requester.

These steps may be performed at a server responsible for preparation of the BPP comprising the given connectivity profile to be installed on a particular secure element. These steps could be performed either at the time of the connectivity profile provisioning process being performed to provide the secure element with the given connectivity profile, or could be performed as an offline process separate from the connectivity profile provisioning process. For example, the BPP preparation may occur based on a request by a device manufacturer to be provided with BPPs corresponding to a specified batch of secure elements that will be integrated into a batch of devices by that device manufacturer, so the steps for BPP preparation could occur long before the BPPs are actually used for provisioning secure elements with the corresponding profiles. Regardless of when the BPPs are prepared, by providing a BPP preparation method where the BPP is encrypted using an encryption key corresponding to a pre-installed key associated with the secure element, rather than negotiating the encryption key through key agreement with the secure element at the time of provisioning, this helps address the challenges discussed above for provisioning energy constrained devices with connectivity profiles for mobile network communication.

The BPP preparation server may select the encryption key to be used for encrypting the BPP from among a plurality of encryption keys specific to the secure element, the plurality of encryption keys corresponding to a plurality of pre-installed keys pre-installed in the key storage of the secure element. Hence, the secure element is assigned in advance a set of multiple keys available for selection by the BPP preparation server, so that the secure element can support installation of up to a certain maximum number of profiles. The server may maintain a record of which keys have previously been used for that security module, to prevent the same key being used for more than one connectivity profile. The server may communicate to the secure element a key identifier indicative of which key has been used, which the secure element can use to select the particular one of the pre-installed keys which will be used to decrypt the BPP. The server may also communicate to the secure element a keyset identifier distinguishing which keyset is to be used (e.g. the keyset identifier could be a server identifier or public key associated with the server or the mobile network operator that provided the profile, and can be used to distinguish from keysets associated with other parties).

The encryption key used to prepare the BPP may be a key obtained without performing any key agreement procedure between the secure element and a provider of the bound profile package at the time of preparing the bound profile package. This eliminates the key agreement step which is a barrier to adoption of RSP when provisioning connectivity profiles for secure elements used in energy-constrained devices.

The pre-installed key may comprise a key installed on the secure element while the secure element is at a security-accredited site. For example, the installation site for the key installation may be a site accredited according to the GSMA Security Accreditation Scheme (SAS). In many instances, the security-accredited site may be the site of the original manufacturer of the secure element, who may, as part of the secure element manufacturing process, perform a secure key injection process to install the pre-installed key(s) in the secure element. Alternatively, some implementations may support the ability for a downstream party accredited by GSMA SAS to install the pre-installed keys. Either way, the installer of the keys may either trigger the secure element to generate the keys internally and communicate them to a device outside the secure element, or generate the keys external to the secure element and then inject them onto the device for storage in the key storage. Regardless of which approach is taken, the installer of the keys may communicate the installed keys for a particular secure element to a remote server which may maintain a database of keys for respective secure elements. Alternatively, the installer of the keys may exchange credentials with the server in advance of the key generation, and then both the installer of the keys and the server may separately perform complementary parts of a key agreement procedure (according to any known cryptographic algorithm) so that each side generates complementary copies of the keys independently without needing to exchange the keys afterwards. Regardless of how the keys are established during the manufacturing/personalisation phase, the key database can be made available for later access by a BPP preparation server during BPP preparation. A party responsible for maintenance of the key database may verify credentials of the party providing the keys to the database to verify that the keys were generated by a trusted party (e.g. checking certificates according to a public key infrastructure to verify that the source of the keys is a security-accredited party). Hence, by use of a security accreditation scheme to protect the installation of keys, the security guarantees which in RSP are provided based on per-session key agreement steps can still be maintained even in an approach which relies on pre-installed keys to protect the BPP transmission.

Some examples may use, as the encryption key and pre-installed key, asymmetric keys where the encryption key does not equal the pre-installed key.

However, in some implementations, symmetric keys are used to encrypt/decrypt the BPP, so that the pre-installed key used by the secure element for decryption equals the encryption key used by a BPP preparation server for encryption. A symmetric key scheme is simpler to manage and is sufficient to provide the required security guarantees. By using symmetric keys, costly asymmetric key cryptographic functions can be avoided.

The techniques discussed above can be applied to any security module used to protect connectivity profiles for mobile network communication against tampering, but in particular these can be performed where the security module is one of a universal integrated circuit card (UICC); an embedded UICC (eUICC); and an integrated UICC (iUICC). The methods can be particularly useful for eUICCs or iUICCs which are typically not replaceable in the field and so provision of new connectivity profiles when in the hands of an end user would rely on a remote provisioning method such as the techniques described above. However, the same methods can also be applied for a conventional UICC implemented as a discrete card to be loaded into a removable card slot of an electronic device. Even though a conventional UICC would be replaceable by an end user, that may still be inconvenient for a user if the device comprising the UICC is at a remote location or if there are a large number of devices managed by that user which require connectivity profile updates. By enabling remote provisioning of new profiles onto security modules whichever form factor is used for the security module (e.g. UICC, eUICC or iUICC), this can enable a user to reconfigure a set of devices remotely without physical access to the devices.

Some more specific examples are explained with reference to the drawings.

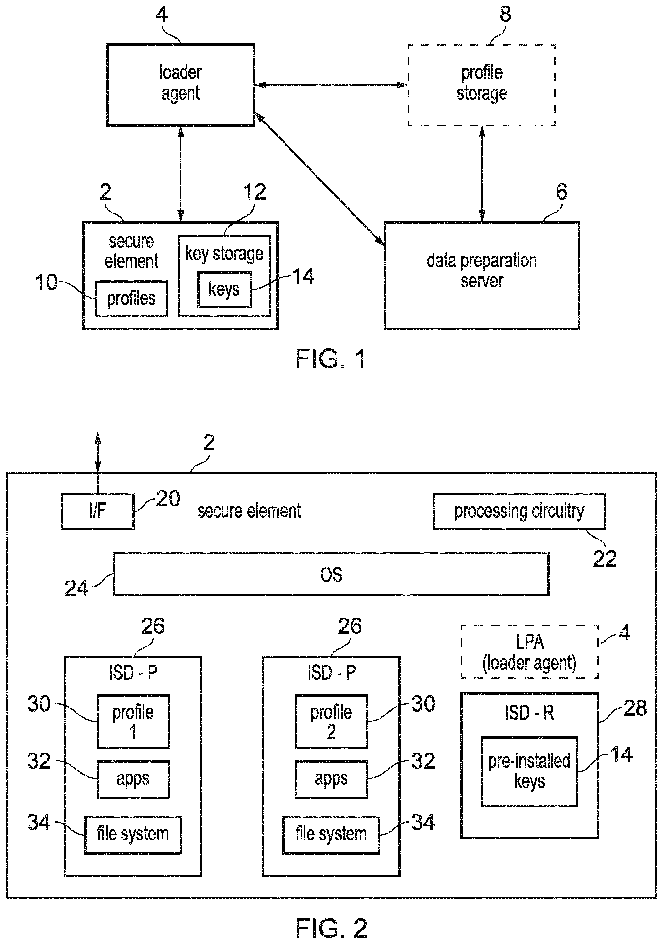

Figure 1 illustrates an example of infrastructure for provisioning a secure element 2 with connectivity profiles 10 for mobile network communication. The secure element 2 (also referred to as a hardware secure element (HSE), security module, or subscriber identity module (SIM)) could be a UICC, eUICC or iUICC, for example. The secure element 2 is for use in an electronic device which is to be provided with mobile network connectivity. That device could be any of a wide variety of devices, e.g. a mobile telephone, tablet computer, automotive vehicle, manufacturing equipment in a factory, home appliance such as a washing machine or refrigerator, etc. It will be appreciated that this is just a small subset of the possible use cases for the secure element, and this list is non-exhaustive. While the techniques below can be used in any scenario where a secure element 2 is provided, they can be particularly useful in cases where the secure element 2 is to be used within a relatively small device with tight energy usage constraints, such as a device powered by energy harvesting (energy scavenged from ambient sources, such as solar energy, thermal energy, wind energy, tidal energy, or radio-frequency electromagnetic wave energy). For example, the device could be a sensor, actuator, controller, or other device in the Internet of Things, which may have relatively limited functionality compared to more complex devices such as mobile telephones or tablets, but which may often be located at a remote location and so provision of new connectivity profiles can be a challenge once the device is in the field. Also, the relatively low cost of such devices means that increased manufacturing complexity can cause manufacturing costs to increase in a manner disproportionate to the value of the product. The techniques discussed below can alleviate these problems.

A loader agent 4 is provided for managing loading of connectivity profiles 10 onto the secure element 2. Key storage 12 is provided in the secure element, for storing one or more pre-installed keys 14 (installed during manufacturer of the secure element, for example) for use in decrypting connectivity profiles being loaded onto the secure element. A connectivity profile may comprise various pieces of software and information for enabling the device comprising the secure element 2 to access a mobile network provided by a particular operator. For example, the collectivity profile may comprise identifiers and keys used to access the network, applets or applications to be run within the secure element during network access, profile policy rules set by the mobile network operator to govern use of the profile and/or access to the network, etc. The loader agent 4 could be a dedicated hardware device, or software executing within the secure element 2 itself, or software executing on the device that comprises the secure element 2, or software executing on an external helper device that is used to configure the device comprising the secure element (e.g. the helper device may have a more capable user interface than the device comprising the secure element itself), or any combination of these options.

A data preparation server 6 is responsible for preparing a "bound profile package" (BPP) which is an encrypted package of binary data (also known as a "blob" or large binary object) which comprises a connectivity profile to be provisioned on the secure element 2. The BPP is encrypted using a key which is specific to a particular secure element 2, so that the same BPP cannot be successfully installed on another secure element which does not have the key associated with the secure element 2 on which the BPP is intended to be installed. Hence, connectivity profiles can be cryptographically linked to a particular secure element so that the profile cannot be cloned on more than one secure element and can be trusted to represent a particular user assigned that connectivity profile. The data preparation server 6 could be operated by the mobile network operator, or by a third party organization trusted by mobile network operators to prepare the BPP according to their requirements.

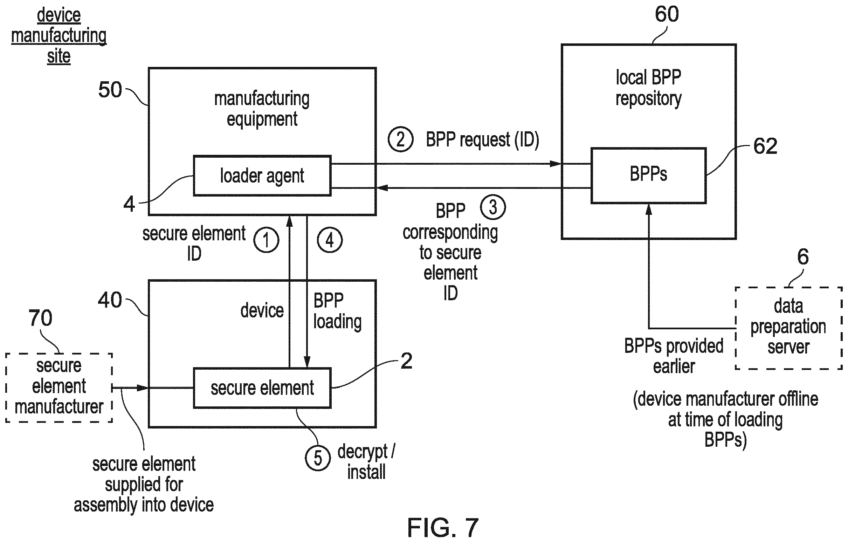

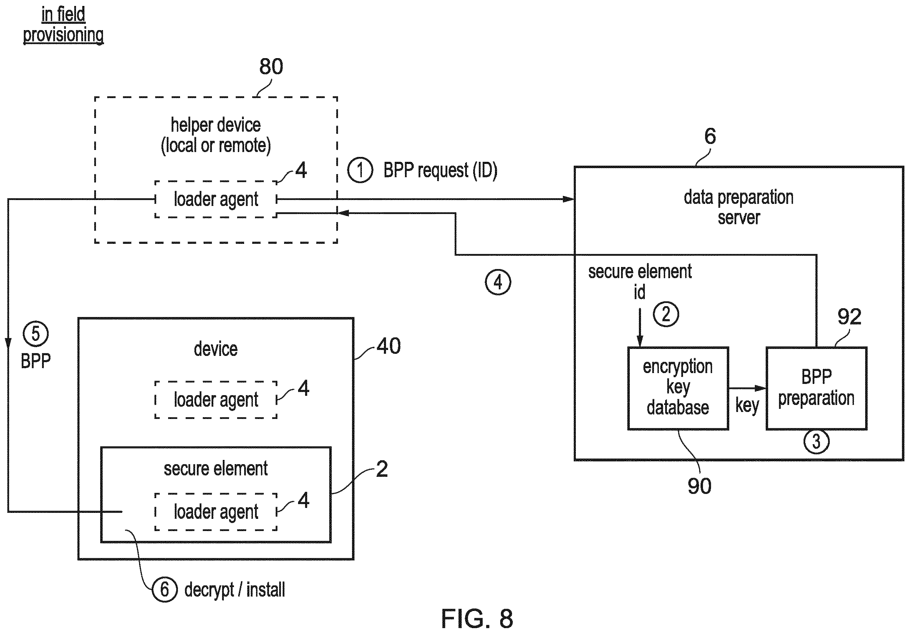

While BPPs can be provided direct from the data preparation server 6 to the loader agent 4, in some cases a BPP may be provided by the data preparation server 6 to profile storage 8 (e.g. a server or local storage repository at a manufacturing site), from which a BPP may be read by the loader agent 4 for installation on a secure element 2. As discussed further below with respect to Figures 7 and 8, a number of use case scenarios can be envisaged, including loading within a device manufacturing setting or loading while the device is in the field in the hands of an end user.

Figure 2 illustrates an example of hardware, software and stored data/information provided on a secure element 2. As hardware components, the secure element comprises interface circuitry 20 for exchanging signals with one or more devices external to the secure element (e.g. the host device for which the secure element manages network access, or other devices external to the host device such as the data preparation server 6), processing circuitry 22 for executing instructions defined in a software program, and data storage for storing the software to be executed by the processing circuitry 22 and other data, files and keys for use by the software.

As software components, the secure element has installed on it a secure element operating system 24 for controlling operation of the secure element, and optionally a local profile assistant (LPA), which is an example of the loader agent 4 described earlier for controlling loading of new profiles onto the secure element 2.

The hardware/software architecture of the secure element 2 supports definition of a number of "issuer security domains" (ISDs) including at least one ISD-P (Issuer Security Domain - Profile) 26 and an IDS-R (Issuer Security Domain - Root) 28. Once established, each ISD 26, 28 may comprise a connectivity profile 30, applications 32 and a file system 34 associated with a given network provider (although not explicitly shown in the ISD-R 28 in Figure 2, the ISD-R 28 may have similar components 30, 32, 34 to the ISD-Ps 26). Each ISD 26, 28 is isolated from access by each of the other ISDs 26, 28, by the hardware/software infrastructure. For example, access permissions to the data storage may be implemented to prevent applications in one ISD accessing data, keys or software associated with another ISD. Also, encryption keys specific to a given ISD may be used to protect stored data associated with that ISD, where those encryption keys are not accessible to another ISD.

The ISD-R 28 is responsible for the creation and lifecycle management of ISD-Ps. The ISD-R 28 may be installed when the secure element 2 is a factory, and may be responsible for accessing the pre-installed keys 14 mentioned earlier which are pre-installed at the manufacturing stage for later use in decrypting operational profiles for ISD-Ps 26. A given ISD-P 26 is created at the point when the corresponding profile 30 is to be installed. Hence, the pre-installed key 14 for use in decrypting the profile to be installed in a given ISD-P 26 exists in the ISD-R 28 even before the ISD-P 26 is created. The ISD-P 26 is the on-secure-element representative of the connectivity profile issuer (typically a mobile network operator), so the issuer is responsible for the provision and configuration of the contents of the ISD-P 26, which are defined using a bound profile package (BPP) provided to the secure element 2 when loading a new profile as described earlier. During the manufacturing process, at least one connectivity profile may be pre-loaded (e.g. an ISD-P 26 may already have been established at the manufacturing stage), so that the secure element 2 can support network connectivity to allow a device comprising the secure element 2 to install other profiles by remote provisioning later on.

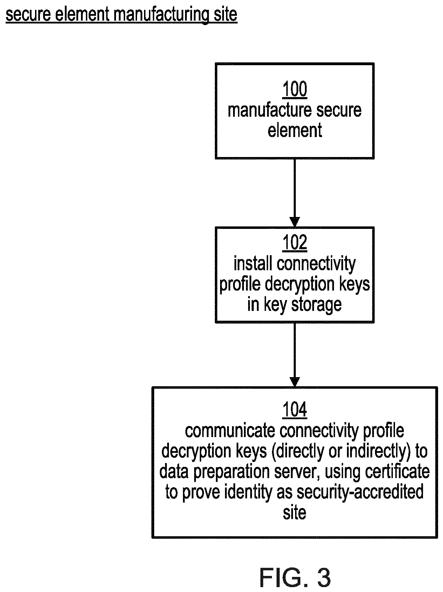

Figure 3 illustrates steps performed at a secure element manufacturing site, during manufacture of a secure element 2. At step 100, the secure element 2 is manufactured, comprising the hardware components such as the interface circuitry 20, processing circuitry 22 and data storage including key storage 12. The manufacturer may also inject various software components onto the secure element, such as the operating system 24 and, if provided, LPA 4. The manufacturer may also establish the ISD-R 28 which is responsible for creation and lifecycle management of ISD-Ps.

At step 102, the manufacturer installs connectivity profile decryption keys 14 in the key storage 12 of the secure element 2. This could be done either by triggering key generation functions within the secure element 2 to generate new decryption keys, or by generating the keys outside of the secure element and injecting the keys into the secure element 2 via the interface 20. If the decryption keys are generated within the secure element 2, encryption keys corresponding to decryption keys installed on the secure element are read out via the interface 20 to a manufacturing device. Although asymmetric cryptography could be used based on asymmetric key generation functions, in which case the encryption keys read out differ from the decryption key installed on the device, symmetric keys can give sufficient security and are much simpler to manage. Hence, in some examples the read out encryption keys are the same key as the decryption keys installed on the secure element 2. A given secure element 2 may be installed with more than one decryption key, with each key in the set of decryption keys being associated with a corresponding key identifier allowing the specific key to be used for a given BPP decryption to be distinguished. In some examples, multiple keysets associated with different BPP providers can be installed, with each keyset associated with a respective keyset identifier.

At step 104, the manufacturer communicates the encryption keys corresponding to the installed connectivity profile decryption keys 14 either directly or indirectly to one or more data preparation servers 6. If multiple keysets associated with different BPP providers were installed, each keyset may be sent to a corresponding data preparation server associated with the relevant BPP provider. The communication can be performed in a batch for multiple secure elements, with each set of keys associated with information enabling identification of the specific secure element on which those keys were installed (e.g. for an eUICC, the identification information could be the "EID" (eUICC identifier) of the secure element 2, although other information such as batch/reel numbers relating to the specific manufacturing process could be used to identify the secure element), so that the keys can be recorded in a database in association with identification information relating to the secure element, to allow for subsequent lookup during BPP preparation. The communication of the keys to the data preparation server 6 could be via a network or using physical transport of a physical storage medium, for example.

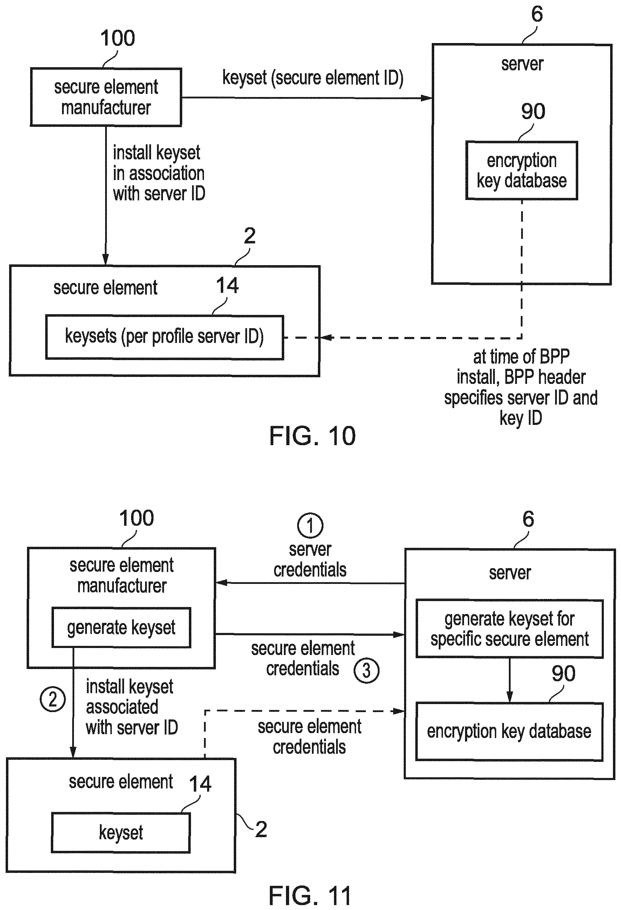

Alternatively, as discussed further with respect to Figure 11 below, the step 104 of communicating the decryption keys can be avoided if instead credentials used to generate the keys are exchanged between the secure element manufacturer and the data preparation server prior to generation of the keys, with the keys being generated at each end according to a symmetric key agreement protocol so that the data preparation server and secure element manufacturing site can independently generate corresponding keys based on the shared credentials.

Steps 100 and 102 (and if performed, step 104) take place at a security-accredited manufacturing site (e.g. a site vetted according to the GSMA Security Accreditation Scheme), and the communicated keys 14 can be accompanied with one or more digital certificates which can be verified by a third party to check that the keys 14 are provided by an accredited entity. The security accreditation scheme may involve inspection of the manufacturer's processes to establish trust that the required processes for secure manufacturing and configuration of the secure element are being followed. Hence, by verifying at the time of communication of the keys 14 that the party that installed/communicated the keys is accredited, the server can have trust that the keys were correctly installed and can securely be used for encryption/decryption of the BPP.

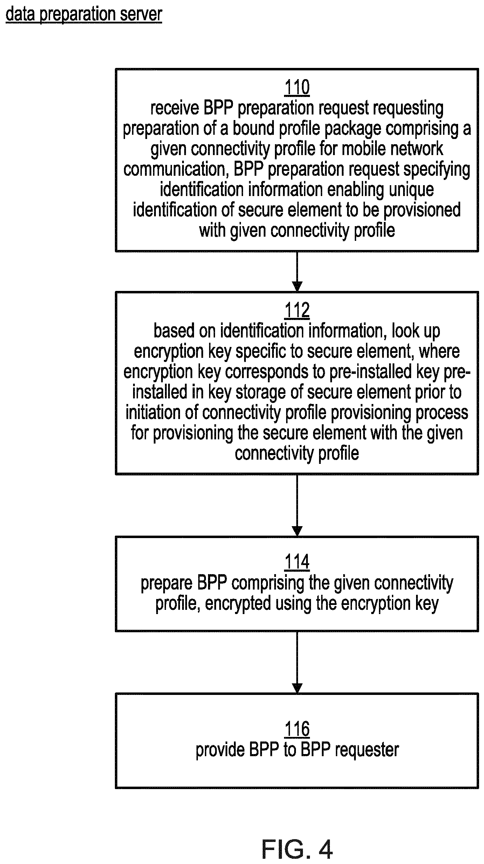

Figure 4 illustrates steps performed by a data preparation server 6 to prepare and communicate a BPP to a party requesting the BPP. At step 110 the server 6 receives a BPP preparation request requesting preparation of the BPP comprising a given connectivity profile for mobile network communication. The request could be received either from the secure element 2 itself (or from the host device which hosts the secure element 2), or from another device such as an external helper device acting as loader agent 4, or from manufacturing equipment at a device manufacturer site which may wish to install profiles on one or more secure elements being built into host devices. The BPP preparation server 6 may already have been given information about a specific connectivity profile which a mobile network operator has agreed to provide to a particular party to enable network access for that party (e.g. the mobile network operator may have negotiated with either the end user of the device which is to be installed with the secure element, or with a manufacturer who is creating devices comprising secure elements with connectivity profiles installed). Hence, the profile 30 itself and any other contents (e.g. apps 32 and files 34) of the BPP that are specific to the profile issuer may already have been communicated to the data preparation server 6 earlier.

The BPP preparation request specifies identification information enabling unique identification of a particular secure element to be provisioned with a given connectivity profile (e.g. an EID or batch/reel information, or any other information enabling a specific secure element to be identified). At step 112, based on this identification information, the server 6 looks up its key database to obtain an encryption key specific to the secure element, which corresponds to a pre-installed key 14 that was pre-installed in the key storage 12 of the secure element 2 during the manufacturing stage as shown in Figure 3, prior to initiation of any specific connectivity profile provisioning process for provisioning the secure element 2 with the given connectivity profile.

In some examples, where the secure element 2 was provided with multiple pre-installed keys during the manufacturing stage, step 112 may include the server 6 determining which of the keys have not been used yet, and selecting one of the previously unused keys as the encryption key to be used for protecting the BPP. Hence, each key may be a single-use key which is only used for a single BPP transmission and is then no longer usable. The server 6 is responsible for managing which keys have already been used (this can be recorded in the key database, for example). Where a selection is made from a set of multiple encryption keys, the server 6 may obtain a key identifier distinguishing which key has been used.

At step 114, the server 6 prepares a BPP comprising the given connectivity profile 30 and any other information (e.g. applications 32 and files 34) required by the profile issuer, and encrypts the BPP using the encryption key selected at step 112, which is specific to a particular secure element 2. Hence, this BPP would not be able to be successfully installed on any secure element 2 other than the particular secure element 2 whose identification information was specified in the BPP preparation request. Where the encryption key was selected from among a set of two or more encryption keys corresponding to that secure element 2, the BPP is associated with a key identifier specifying which of the set of keys was used. The BPP may also specify a keyset identifier indicating which keyset is to be used by the secure element (which may have multiple keysets corresponding to different BPP providers). For example, the keyset identifier and key identifier can be included in a header portion of the BPP.

At step 116, the encrypted BPP is provided to the requester who sent the BPP preparation request. Again, the BPP could be communicated via a network, or could be transferred to the requester via physical transport of a physical storage medium storing the BPP (e.g. this could be useful when providing BPPs to a device manufacturer whose manufacturing site does not have any network connectivity).

In some examples, the steps of Figure 4 can be performed in a batch for multiple BPPs, e.g. receiving a BPP preparation request at step 110 which specifies a batch of identification information for multiple secure elements 2, looking up the keys for each respective secure element 2 at step 112, and generating multiple BPPs encrypted with the corresponding keys at step 114 for provision to the requester at step 116. For example, this can be useful if the BPPs are to be installed on the secure elements at a device manufacturer site. Alternatively, the steps of Figure 4 could be performed on request from an end user to generate a single BPP on demand when required for installation on a particular secure element 2.

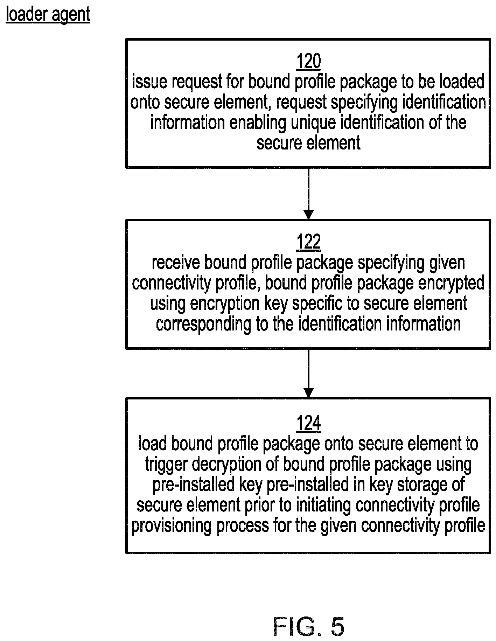

Figure 5 illustrates steps performed by loader agent 4 to request loading of a new connectivity profile on associated secure element 2. For example, the loader agent 4 could be the LPA executing on the secure element 2 itself, software executing in a host device that comprises the secure element 2, or software executing in a helper device separate from the host device or executing in manufacturing equipment at a device manufacturing site.

At step 120, the loader agent 4 issues a request for a BPP to be loaded onto the secure element 2. The request specifies the identification information enabling unique identification of the secure element 2 (e.g. the EID or other identification information mentioned earlier). In some examples, this request for loading of the BPP may be the same request as the BPP preparation request shown at step 110 of Figure 4, so that this request may trigger the data preparation server 6 to generate the BPP as shown in the process of Figure 4. Alternatively, the BPP may have been generated earlier through an off-line process, and the request sent by the loader agent 4 may be sent to the profile storage 8 or another location at which a previously generated BPP for a specific secure element 2 can be accessed.

At step 122, in response to the BPP request, the loader agent 4 receives the BPP specifying the given connectivity profile to be loaded on the secure element 2, where the BPP has been encrypted using an encryption key specific to the secure element 2 that corresponds to the identification information specified in the BPP request sent at step 120. The loader agent 4 triggers the secure element 2 to create a new ISD-P 26 for hosting the given connectivity profile. At step 124, the loader agent 4 loads the BPP onto the secure element 2 to trigger the secure element 2 to decrypt the BPP using the pre-installed key 14 that was pre-installed in the key storage 12 of the secure element 2 prior to the loader agent 4 initiating the connectivity profile provisioning process for provisioning the secure element 2 with the given connectivity profile.

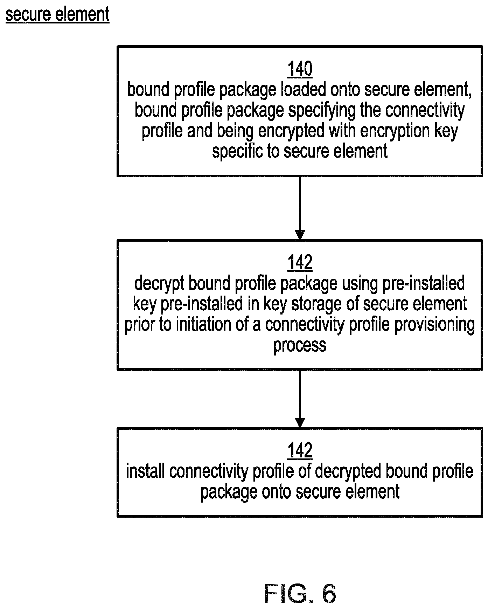

Figure 6 illustrates steps performed by the secure element 2 during the connectivity profile provisioning process. At step 140, the BPP is loaded onto the secure element 2 via the interface circuitry 20. The loading of the BPP could be performed in a single instalment, or in multiple separate instalments with a progress indicator tracking progress made so far. The BPP specifies the given connectivity profile 30 to be installed on the secure element 2 and is encrypted with an encryption key specific to the secure element 2. The BPP may be accompanied by a key identifier which specifies which of the set of pre-installed keys 14 (installed prior to initiation of the connectivity profile provisioning process) is the decryption key that corresponds to the encryption key used to encrypt the BPP. The BPP may also specify a keyset identifier.

At step 142, the secure element 2 obtains the pre-installed key (corresponding to the specified key identifier and/or keyset identifier) from its key storage 12, and decrypts the BPP using the pre-installed key. The decryption may take place under the protection of the specific ISD-P that corresponds to the profile 30 being installed. At step 142, the decrypted connectivity profile 30 and other related information is installed onto the secure element 2 within the relevant ISD-P, and can subsequently be used to enable access to a network managed by the corresponding mobile network operator.

Hence, a solution is provided to load connectivity parameters (aka profiles) in manufacturing or in the field. This can support any one or more of the following features:
- profiles generated by one eUICC manufacturer (EUM) can be loaded into (e)SIM cards with another EUM OS
- Profiles can be requested programmatically without the use of a public network
- Profiles can be requested programmatically and received asynchronously via file transfer
- Profiles can be downloaded without the use of RSP
- Profiles can be downloaded without IP protocols

For in field provisioning it can be useful for a progress indication to be maintained to track progress in downloading the "Blob" (large binary object) providing the BPP comprising the profile.

Although the approach described above based on pre-installed keys departs from the standard provisioning processes defined by the GSMA in standards such as SGP.22 and SGP.32, these standard provisioning processes can also be supported by the secure element 2, allowing the loader agent 4 to select for a given profile provisioning process whether to use the standard RSP (SGP.22) or the approach based on pre-installed keys 14 as discussed above.

The provisioning process can be managed to improve energy efficiency, for example:
a. The atomic operation associated with BPP installation can be performed locally (not requiring live internet connection whether cellular or otherwise, if installing a BPP previously obtained into profile storage 8)
b. The atomic operation is not applicable to end-to-end data transaction flows (no risk of server/TLS handshake timeouts)
c. allowing for download of secure blob material over multiple Sessions,
d. improved time efficiency:
   i. Reducing asymmetric crypto functions to be invoked.
   ii. Not dependent on server timeouts

In one implementation of the approach described above, an eUICC Maker (EUM) prepares a set of eUICCs. Each eUICC contains individual binding keys 14 and is identified by its EID. The recipient of the eUICC 14 (e.g. a device manufacturer) can request connectivity profiles and provides EIDs for the eUICCs. The data preparation server 6 (e.g. operated by the EUM) binds connectivity profiles 30 using individual binding keys for each EID, creating a unique and secure blob which can only be used once by one EID. The recipient of the eUICC (e.g. the device manufacturer) then loads the unique blob onto the corresponding eUICC. Using a command to reference the individual key, a ISD-P 26 is created and associated with the specific binding key. The eUICC 2 creates and installs the connectivity profile into ISD-P, using the referenced binding key to authenticate and decrypt secure blob. The connectivity profile can then be managed like any other pre-installed profiles or RSP-downloaded connectivity profiles.

Figure 7 illustrates a first example use case, where the profile provisioning takes place at a device manufacturing site (e.g. the site where secure elements 2 are installed onto a host device 40 such as an Internet of Things sensor/actuator). In advance of the provisioning process, the device manufacturer obtains a batch of secure elements 2 from the secure element manufacturer 70 and requests a corresponding batch of BPPs from the data preparation server 6. For example, the device manufacturer requests that the server 6 provides a specific profile Type or list of profiles, identifying a batch of secure elements 2 using information such as eUICC Part Number and Reel IDs (providing a method to derive batch of EIDs) or list of EIDs. In response, the data binding source (server 6) identifies associated Keysets corresponding to the secure elements 2 on which the profiles are to be installed, and creates a secure blob script/file leveraging the preloaded binding keys and profile data. The BPPs 62 received from the data preparation site 6 are installed onto a local BPP repository 60 at the manufacturing site for access during the manufacturing process.

Hence, as the BPPs are obtained in advance, the device manufacturing site does not require any external network access via Internet Protocol. The use of pre-installed keys for decryption means no key negotiation steps have to be carried out with the data preparation server 6 during the provisioning process.

During the provisioning process itself, when a device 40 installed with a given secure element 2 reaches the provisioning stage of manufacturer, the local manufacturing equipment 50 (which can be considered to include the loader agent 4 in this example) reads (step 1) from the device 40 the identification information relating to the secure element 2, and sends (step 2) the BPP request specifying the identification information to the local BPP repository 60 to look up the associated blob providing the BPP specific to the secure element 2 currently being processed. At step 3, the BPP corresponding to the secure element 2 is returned to the loader agent 4, and at step 4 the BPP is loaded onto the secure element to trigger the secure element to decrypt and install the connectivity profile from the BPP (step 5). Once the secure blob file corresponding to the BPP is installed, the profile 30 can be used just like any other connectivity profile.

With this approach, there is no need for the device manufacturer to manage, as separate stock-keeping units (SKUs), respective sub-batches of devices 40 which have been loaded with different connectivity profiles. A common manufacturing flow can be used for a batch of devices 40 corresponding to a single SKU, even if respective subsets of the devices have been designated in advance by the data preparation server 6 as requiring different connectivity profiles. The device manufacturer never needs to know the specific keys used for decrypting the BPPs at the secure element or which particular profile is designated for each device. Also, the lack of key negotiation steps means the manufacturing flow can be more efficient in terms of reducing the time spent by each device 40 at the provisioning station 50, and avoiding loss of performance caused by server time outs etc. Therefore, by reducing manufacturing time per device, manufacturing costs can be reduced.

Figure 8 shows a second use case scenario, where the provisioning of the secure element takes place in-field when the device is in the hands of an end user or is at its operational location. A loader agent 4 executing either within the secure element 2, it's host device 40 or a separate helper device 80 manages the loading of the connectivity profile onto the secure element. Hence, the device 40 does have IP connectivity in this scenario (e.g. based on a previously installed profile in an ISD-P 26), but for extremely battery constrained use cases (e.g. where the device 14 is powered by energy harvesting) the device 40 cannot guarantee to have sufficient energy to be able to download the BPP in a single communication session.

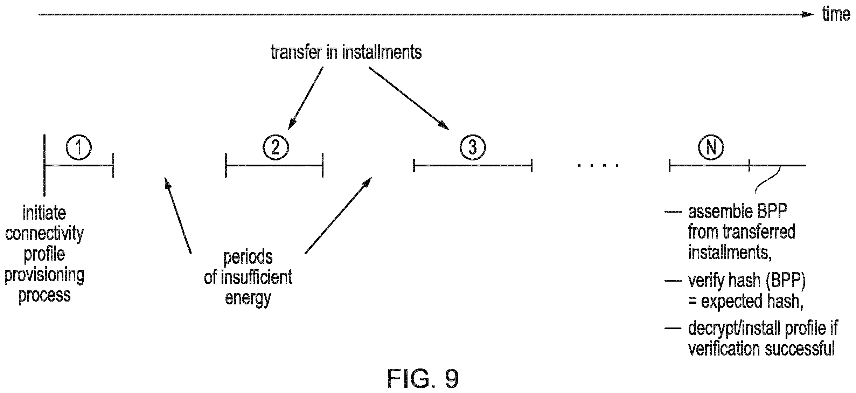

Hence, at step 1 of Figure 8, the loader agent 4 issues a BPP request to the data preparation server 6. At step 2, the data preparation server 6 looks up identification information specified in the BPP request (which uniquely distinguishes the secure element 2) in its encryption key database 90 to identify a previously unused key specific to that secure element 2. At step 3, encryption logic 92 at the data preparation server 6 uses the selected key to encrypt a BPP providing the corresponding connectivity profile to be installed on the secure element, which is returned to the loader agent at step 4 and installed on the secure element at step 5. File transfer utilities embedded within data management functions provided by the device 40 can be used to transfer the BPP to the device 40 in either a single session or multiple IP Sessions. As shown in Figure 9, if multiple IP sessions are needed (given available energy budget), then the BPP blob can be transferred in instalments, as and when there is sufficient energy available. A progress tracker within the loader agent 4 may track the progress reached in transferring the BPP, and once all parts of the BPP have been transferred, the BPP can be re-assembled from the transferred instalments. A checksum or other hash value is derived from the re-assembled BPP and compared against an expected value to verify that the BPP has been correctly assembled and no instalments are missing. If the verification is successful, the secure element 2 can decrypt the BPP and execute the associated scripts (at a time when enough energy is available), to install the connectivity profile 30 in the relevant ISD-P 26 (step 6 of Figure 8). Subsequently, the profile can be used just like any other profile.

Figures 10 and 11 show two alternative scenarios for the establishment of the keyset in the secure element. In the first example shown in Figure 10, a secure element manufacturer generates and installs the keyset 14 in the secure element 2, and associates the keyset 14 with a keyset identifier (e.g. identifier or key associated with the profile server 6 that will issue the BPP using that keyset 14). The manufacturer 100 sends the generated keyset (together with the secure element's identifier) to the profile server 6, which installs the keys in its encryption database 90. At the time of profile provision, the BPP header specifies the keyset identifier so that the secure element 2 can select the right keyset based on the BPP header.

Figure 11 shows a second example which avoids the need to exchange the keys, so can increase security. In this example, the manufacturer 100 and server 6 can both independently generate the keys, so that they do not need to exchange the keys. At step (1) the manufacturer receives an identification and credentials from the server 6. At step (2) the manufacturer uses the credentials to generate the pre-installed keys 14 and inject them into the secure element 2. At step (3) the manufacturer 100 sends the secure element's credentials to the profile server to allow the server 6 to generate the same pre-installed keys at its end. As there is no transfer of sensitive information (the keys), this increases the protection that only the authorized server 6 will be able to generate the profiles. An alternative is that the manufacturer does not share the secure element's credentials at step (3), but instead the server 6 can request the credentials from the secure element 2 at a later time than the manufacturing phase.

Some examples are set out in the following clauses:
1. A method for provisioning a secure element with a given connectivity profile for mobile network communication, the method comprising:
   receiving, at the secure element, a bound profile package specifying the given connectivity profile, the bound profile package being encrypted using an encryption key specific to the secure element;
   decrypting the bound profile package using a pre-installed key pre-installed in key storage of the secure element prior to initiation of a connectivity profile provisioning process for provisioning the secure element with the given connectivity profile; and
   installing the given connectivity profile from the decrypted bound profile package on the secure element.
2. The method of clause 1, in which the given connectivity profile is installed into a given Issuer Security Domain - Profile, ISD-P, of the secure element; and
   the given ISD-P is created after the pre-installed key is already stored in the key storage of the secure element.
3. The method of any of clauses 1 and 2, in which the bound profile package is decrypted using a selected pre-installed key selected from among a plurality of pre-installed keys pre-installed in the key storage prior to initiating the connectivity profile provisioning process for the given connectivity profile, and the bound profile package is encrypted using a selected encryption key corresponding to the selected pre-installed key.
4. The method of claim 3, in which the selected pre-installed key is selected based on at least one of:
   a keyset identifier of a keyset associated with a party providing the bound profile package; and
   a key identifier identifying a specific key within the keyset associated with the party providing the bound profile package.
5. The method of any of clauses 3 and 4, in which each of the plurality of pre-installed keys is a single-use key restricted for use in provisioning of a single connectivity profile on the secure element.
6. The method of any of clauses 1 to 5, in which the pre-installed key is a key obtained without performing any key agreement procedure between the secure element and a provider of the bound profile package at the time of performing the connectivity profile provisioning process for the given connectivity profile.
7. The method of any of clauses 1 to 6, in which the connectivity profile provisioning process supports the bound profile package being transferred from an external source to a device comprising the secure element in two or more separate transfer sessions.
8. The method of clause 7, comprising maintaining a progress tracking indication to track progress of transferring the bound profile package to the device comprising the secure element.
9. The method of any of clauses 7 and 8, in which:
   installation of the bound profile package on the secure element is dependent on verification of whether a check value, derived from the bound profile package assembled from data transferred to the device, corresponds to an expected value.
10. The method of any of clauses 1 to 9, in which, as a further method of provisioning the secure element with at least one connectivity profile for mobile network communication, the secure element also supports Remote Sim Provisioning according to GSMA SGP.22.
11. A method comprising:
   receiving a bound profile package preparation request requesting preparation of a bound profile package comprising a given connectivity profile for mobile network communication, the bound profile package preparation request specifying identification information enabling unique identification of a secure element to be provisioned with the given connectivity profile;
   based on the identification information, looking up an encryption key specific to the secure element, wherein the encryption key corresponds to a pre-installed key pre-installed in key storage of the secure element prior to initiation of a connectivity profile provisioning process for provisioning the secure element with the given connectivity profile;
   preparing the bound profile package comprising the given connectivity profile, where the bound profile package is encrypted using the encryption key specific to the secure element; and
   providing the bound profile package to the bound profile package requester.
12. The method of clause 11, comprising selecting the encryption key from among a plurality of encryption keys specific to the secure element, the plurality of encryption keys corresponding to a plurality of pre-installed keys pre-installed in the key storage of the secure element.
13. The method of any of clauses 11 and 12, in which the encryption key is a key obtained without performing any key agreement procedure between the secure element and a provider of the bound profile package at the time of preparing the bound profile package.
14. A method for provisioning a secure element with a given connectivity profile for mobile network communication, the method comprising:
   issuing a request specifying identification information enabling unique identification of the secure element;
   receiving, in response to the request, a bound profile package specifying the given connectivity profile, wherein the bound profile package is encrypted using an encryption key specific to the secure element corresponding to the identification information; and
   loading the bound profile package onto the secure element to trigger decryption of the bound profile package using a pre-installed key pre-installed in the key storage of the secure element prior to initiation of a connectivity profile provisioning process for provisioning the secure element with the given connectivity profile.
15. The method of any of clauses 1 to 14, in which the pre-installed key comprises a key installed on the secure element while the secure element is at a security-accredited site.
16. The method of any of clauses 1 to 15, in which the encryption key is a symmetric key equal to the pre-installed key.
17. The method of any of clauses 1 to 16, in which the security module is one of:
   a universal integrated circuit card (UICC);
   an embedded UICC (eUICC); and
   an integrated UICC (iUICC).
18. A computer program comprising instructions which, when executed on a computer, cause the computer to perform the method as claimed in any preceding clause.
19. A secure element comprising:
   interface circuitry to receive a bound profile package specifying a given connectivity profile, the bound profile package being encrypted using an encryption key specific to the secure element;
   key storage to store a pre-installed key pre-installed on the secure element prior to initiation of a connectivity profile provisioning process for provisioning the secure element with the given connectivity profile; and
   processing circuitry to decrypt the bound profile package using the pre-installed key, and to install the given connectivity profile from the decrypted bound profile package on the secure element.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

In the present application, lists of features preceded with the phrase "at least one of" mean that any one or more of those features can be provided either individually or in combination. For example, "at least one of: A, B and C" encompasses any of the following options: A alone (without B or C), B alone (without A or C), C alone (without A or B), A and B in combination (without C), A and C in combination (without B), B and C in combination (without A), or A, B and C in combination.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope of the invention as defined by the appended claims.

## Claims

1. A method for provisioning a secure element with a given connectivity profile for mobile network communication, the method comprising:
receiving, at the secure element, a bound profile package specifying the given connectivity profile, the bound profile package being encrypted using an encryption key specific to the secure element;
decrypting the bound profile package using a pre-installed key pre-installed in key storage of the secure element prior to initiation of a connectivity profile provisioning process for provisioning the secure element with the given connectivity profile; and
installing the given connectivity profile from the decrypted bound profile package on the secure element.

2. The method of claim 1, in which the given connectivity profile is installed into a given Issuer Security Domain - Profile, ISD-P, of the secure element; and
the given ISD-P is created after the pre-installed key is already stored in the key storage of the secure element.

3. The method of any of claims 1 and 2, in which the bound profile package is decrypted using a selected pre-installed key selected from among a plurality of pre-installed keys pre-installed in the key storage prior to initiating the connectivity profile provisioning process for the given connectivity profile, and the bound profile package is encrypted using a selected encryption key corresponding to the selected pre-installed key.

4. The method of claim 3, in which the selected pre-installed key is selected based on at least one of:
a keyset identifier of a keyset associated with a party providing the bound profile package; and
a key identifier identifying a specific key within the keyset associated with the party providing the bound profile package.

5. The method of any of claims 3 and 4, in which each of the plurality of pre-installed keys is a single-use key restricted for use in provisioning of a single connectivity profile on the secure element.

6. The method of any of claims 1 to 5, in which the pre-installed key is a key obtained without performing any key agreement procedure between the secure element and a provider of the bound profile package at the time of performing the connectivity profile provisioning process for the given connectivity profile.

7. The method of any of claims 1 to 6 in which the connectivity profile provisioning process supports the bound profile package being transferred from an external source to a device comprising the secure element in two or more separate transfer sessions.

8. The method of any of claims 1 to 7, in which, as a further method of provisioning the secure element with at least one connectivity profile for mobile network communication, the secure element also supports Remote Sim Provisioning according to GSMA SGP.22.

9. A method comprising:
receiving a bound profile package preparation request requesting preparation of a bound profile package comprising a given connectivity profile for mobile network communication, the bound profile package preparation request specifying identification information enabling unique identification of a secure element to be provisioned with the given connectivity profile;
based on the identification information, looking up an encryption key specific to the secure element, wherein the encryption key corresponds to a pre-installed key pre-installed in key storage of the secure element prior to initiation of a connectivity profile provisioning process for provisioning the secure element with the given connectivity profile;
preparing the bound profile package comprising the given connectivity profile, where the bound profile package is encrypted using the encryption key specific to the secure element; and
providing the bound profile package to the bound profile package requester.

10. The method of claim 9, in which the encryption key is a key obtained without performing any key agreement procedure between the secure element and a provider of the bound profile package at the time of preparing the bound profile package.

11. The method of any of claims 1 to 10, in which the pre-installed key comprises a key installed on the secure element while the secure element is at a security-accredited site.

12. The method of any of claims 1 to 11, in which the encryption key is a symmetric key equal to the pre-installed key.

13. The method of any of claims 1 to 12, in which the security module is one of:
a universal integrated circuit card (UICC);
an embedded UICC (eUICC); and
an integrated UICC (iUICC).

14. A computer program comprising instructions which, when executed on a computer, cause the computer to perform the method as claimed in any preceding claim.

15. A secure element comprising:
interface circuitry to receive a bound profile package specifying a given connectivity profile, the bound profile package being encrypted using an encryption key specific to the secure element;
key storage to store a pre-installed key pre-installed on the secure element prior to initiation of a connectivity profile provisioning process for provisioning the secure element with the given connectivity profile; and
processing circuitry to decrypt the bound profile package using the pre-installed key, and to install the given connectivity profile from the decrypted bound profile package on the secure element.
